# EUROPÄISCHE PATENTSCHRIFT

(11) **EP 2 643 619 B1**
(45) Veröffentlichungstag und Bekanntmachung des Hinweises auf die Patenterteilung: **17.09.2014**
(21) Anmeldenummer: 11760791.1
(22) Anmeldetag: 27.09.2011
(51) Int. Cl.: F16K 31/06

(54) **VENTILEINRICHTUNG MIT EINEM WENIGSTENS ABSCHNITTSWEISE ZYLINDRISCHEN BEWEGUNGSELEMENT**
VALVE DEVICE HAVING A MOVEMENT ELEMENT WHICH IS CYLINDRICAL AT LEAST IN SECTIONS
SOUPAPE COMPORTANT UN ÉLÉMENT MOBILE CYLINDRIQUE AU MOINS PAR TRONÇONS

(30) Priorität: 26.11.2010 DE 102010062077
(43) Veröffentlichungstag der Anmeldung: 02.10.2013
(73) Patentinhaber: Robert Bosch GmbH, 70442 Stuttgart (DE)
(72) Erfinder: GERUNDT, Oliver, 71292 Friolzheim (DE); HALLER, Juergen, 74343 Sachsenheim (DE); DEPONTE, Rene, 71093 Weil Im Schoenbuch (DE)
(86) Internationale Anmeldenummer: PCT/EP2011/066748
(87) Internationale Veröffentlichungsnummer: WO 2012/069236

(56) Entgegenhaltungen:
- EP-A2- 0 329 287
- GB-A- 862 506
- US-A- 4 456 029

## Beschreibung

### Stand der Technik

Die Erfindung betrifft eine Ventileinrichtung nach dem Oberbegriff der Ansprüche 1 und 2. Aus der GB 862 506 A wird eine solche Ventileinrichtung bekannt.

Magnetische Schaltventile sind vom Markt her bekannt. Häufig wird bei diesen die Hubbewegung eines Ankers über eine Ventilnadel auf einen Ventilkörper übertragen, welche an einem Dichtsitz die eigentliche Ventilfunktion ausführen kann. Die Ventilnadel wird im Allgemeinen an Abschnitten einer zylindrischen Mantelfläche geführt ("Führungsflächen"). Diese Führungsflächen weisen vorzugsweise eine harte Oberfläche auf, damit der Verschleiß über die Lebensdauer gering bleibt. Dies ist insbesondere dann von Vorteil, wenn diese Schaltventile eine Bremsflüssigkeit, einen Benzin- oder einen Dieselkraftstoff schalten und davon durchströmt werden, da diese Medien eine geringe Schmiereigenschaft haben. Daher bietet es sich an, die Führung der Nadel mittels eines separaten Bauteils, das z.B. gehärtet ist, zu realisieren. Eine kostengünstige Möglichkeit zur Montage dieses Führungsbauteils ist es, das separate Führungsbauteil in einen Gehäuseabschnitt des Schaltventils einzupressen.

Patentveröffentlichungen aus diesem Fachgebiet sind beispielsweise die DE 10 2008 043 237 A1, die DE10 2007 034 038 A1, die DE 10 2007 028 960 A1, die DE 10 2005 022 661 A1, die DE 10 2004 061 798, die DE 2004 016 554 A1, die DE 103 27 411 A1, die DE 198 34 121 A1, die EP 1 701 031 A1, die EP 1 471 248 A1, die EP 1 296 061 A2 und die DE 198 33 461 A1.

### Offenbarung der Erfindung

Das der Erfindung zugrunde liegende Problem wird durch eine Ventileinrichtung nach Anspruch 1 gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Neben der Härte des Bauteils hat das Führungsspiel einen großen Einfluss auf den Bauteilverschleiß im Führungsbereich. Bei dem beschriebenen Einpressen des Führungsbauteils kann es erfindungsgemäß kaum noch passieren, dass Presskräfte von einem Außenabschnitt des Führungsbauteils auf die radial innere Bohrung, welche die Ventilnadel führt, übertragen werden. Somit wird verhindert, dass diese Übertragung der Presskräfte zu einer Unrundheit der Innenbohrung und/oder zu einer Verkleinerung des Bohrungsdurchmessers führt. Bei der Bemessung des Führungsspiels muss dieser Umstand somit kaum mehr berücksichtigt werden, so dass das Nennspiel im Allgemeinen sehr gering bemessen wird.

Die erfindungsgemäße Ventileinrichtung hat den Vorteil, dass ein Führungselement zur Führung eines Bewegungselements - beispielsweise einer Ventilnadel - so in ein Ventilgehäuse eingepresst werden kann, dass die an einem radial äußeren ringartigen Abschnitt des Führungselements anliegenden Presskräfte im Wesentlichen von einer Führungsausnehmung entkoppelt sind. Dadurch kann das radiale Führungsspiel verkleinert und der Verschleiß des Führungselements bzw. der Ventilnadel vermindert werden. Außerdem können Einpresskräfte reduziert werden.

Die Erfindung geht von der Überlegung aus, dass die an dem radial äußeren ringartigen Abschnitt anliegenden Presskräfte grundsätzlich zu radial gerichteten Druckspannungen führen, welche den Querschnitt der Führungsausnehmung verkleinern können. Daher weist das Führungselement erfindungsgemäß einen radial inneren ringartigen Abschnitt ("innerer Abschnitt") und ein radial äußeren ringartigen Abschnitt ("äußerer Abschnitt") auf. Der äußere Abschnitt weist an seinem Umfang eine Anzahl N von vorzugsweise über den Umfang gleichmäßig verteilt angeordneten Kontaktabschnitten auf, mittels derer das Führungselement in dem Ventilgehäuse eingepresst ist. Damit wird erreicht, dass die radial von außen angreifenden Presskräfte nur an den Kontaktabschnitten auf das Führungselement einwirken.

In Bezug auf den unabhängigen Anspruch 1 sind zwischen dem inneren Abschnitt und dem äußeren Abschnitt höchstens eine Anzahl N von Verbindungsabschnitten ebenfalls vorzugsweise in Umfangsrichtung gleichmäßig verteilt angeordnet. Radial bzw. in Umfangsrichtung zwischen den Verbindungsabschnitten sind Bereiche mit einer in Bezug auf die Verbindungsabschnitte geringeren Steifigkeit angeordnet. Erfindungsgemäß sind die derart gebildeten Verbindungsabschnitte in Umfangsrichtung gesehen in Bezug auf die Kontaktabschnitte versetzt angeordnet, und zwar wiederum vorzugsweise um einen Winkel von 180°/N. Somit ist das Führungselement vorzugsweise radialsymmetrisch entsprechend der Anzahl N ausgeführt. Es versteht sich dabei, dass jeder Verbindungsabschnitt selbst wiederum eine Mehrzahl von Abschnitten unterschiedlicher Steifigkeit aufweisen kann, solange die Steifigkeit eines Verbindungsabschnitts insgesamt größer ist als die des zwischen zwei benachbarten Verbindungsabschnitten liegenden Abschnitts.

Wegen des in Umfangsrichtung gesehenen Versatzes der Kontaktabschnitte in Bezug auf die Verbindungsabschnitte können die an den Kontaktabschnitten auf das Führungselement wirkenden Presskräfte nicht geradlinig in radialer Richtung auf den inneren Abschnitt übergehen. Vereinfacht lässt sich sagen, dass diese Kräfte durch Verformungen der zwischen den Verbindungsabschnitten gelegenen Abschnitte mit geringerer Steifigkeit aufgenommen werden. Dadurch ist die Führungsausnehmung von den Presskräften im Wesentlichen entkoppelt und wird entsprechend wenig durch diese verformt.

Eine Ausgestaltung der Erfindung sieht vor, dass die Anzahl N drei beträgt. Ein Führungselement mit drei Kontaktabschnitten und drei Verbindungsabschnitten kann stabil eingepresst werden und ergibt eine besonders geringe Verformung der Führungsausnehmung. Ein solches Führungselement kann zudem einfach und billig hergestellt werden.

Die Erfindung ist besonders nützlich, wenn in Umfangsrichtung gesehen zwischen den Verbindungsabschnitten Ausnehmungen vorhanden sind. Dadurch können für den Betrieb der Ventileinrichtung erforderliche axiale Öffnungen in dem Führungselement geschaffen werden, durch die beispielsweise Kraftstoff strömen kann. Vorzugsweise weisen die Ausnehmungen eine entsprechend den Kontaktabschnitten und den Verbindungsabschnitten gleiche Anzahl N auf und sind ebenfalls in Umfangsrichtung gleichmäßig verteilt angeordnet. Insbesondere können die Ausnehmungen radial zwischen den Verbindungsabschnitten angeordnet sein - entsprechend den oben beschriebenen Bereichen mit geringer Steifigkeit - so dass die Führungsausnehmung erfindungsgemäß entlastet wird. Die Ausnehmungen erfüllen somit zwei Funktionen gleichzeitig und sind außerdem kostengünstig herstellbar.

Eine Ausgestaltung der Ventileinrichtung sieht vor, dass die Ausnehmungen nierenförmig sind. Die Nierenform kann mit einem genügend großen Querschnitt zur Durchleitung von Kraftstoff ausgeführt sein und vermindert infolge der rundlichen Form lokal erhöhte mechanische Spannungen. Es versteht sich, dass die Ausnehmungen auch beliebig anders als nierenförmig ausgebildet sein können.

In Bezug auf den unabhängigen Anspruch 2 ist vorgesehen, dass auf dem Außenumfang des äußeren ringartigen Abschnitts in Umfangsrichtung gesehen zwischen den Kontaktabschnitten Abflachungen vorhanden sind. Die Kontaktabschnitte können beispielsweise mittels der dazwischen liegenden Abflachungen aus einer kreisförmigen Grundform des Führungselements gebildet sein. Die Abflachungen sind einfach, kostengünstig und ohne einen größeren Materialabtrag herstellbar.

Ergänzend ist vorgesehen, dass die Abflachung eine konvexe oder konkave Außenkontur aufweist. Dadurch kann der äußere Abschnitt hinsichtlich der Steifigkeit beziehungsweise der Verteilung mechanischer Spannungen optimiert werden. Damit kann auch eine "Stegbreite" des äußeren Abschnitts entlang des Umfangs radial angepasst werden, wobei vorzugsweise die radiale Symmetrie des Führungselements erhalten bleibt. Es versteht sich, dass die "Abflachungen" auch "Aussparungen" oder dergleichen mit einer beliebig anderen Geometrie sein können.

Das Führungselement baut einfacher, wenn es einstückig hergestellt ist. Ein einstückiges Führungselement ist in einem Arbeitsgang herstellbar und weist in allen Abschnitten eine definierte Festigkeit auf, welche im Wesentlichen vom Material und von der Geometrie des Führungselements abhängt.

Weiterhin wird vorgeschlagen, dass das Führungselement mittels Stanzen, einem spanabtragenden Verfahren oder MIM ("Metal injection molding", Pulverspritzgießen) hergestellt ist. Dadurch kann das Führungselement abhängig von seiner konkreten Ausführung mit einem jeweils geeigneten Verfahren kostengünstig und präzise hergestellt werden. Beispielsweise erfordert ein Stanzvorgang eine bestimmte Mindestbreite der Abschnitte des Führungselements in Bezug auf die Materialdicke. Auch ein Verfahren des Kunststoffspritzgießens ist erfindungsgemäß zur Herstellung des Führungselements möglich.

Die Ventileinrichtung kann insbesondere zum Schalten von Kraftstoff, hydraulischem Öl oder Bremsflüssigkeit verwendet werden. Bei diesen Anwendungen ist es erforderlich, das Bewegungselement für die Ventilfunktion besonders präzise zu führen. Dies wird erreicht, indem die Führungsausnehmung erfindungsgemäß mit einem vergleichsweise geringen Spiel herstellbar ist. Außerdem können die Ausnehmungen des Führungselements in die Ventilfunktion integriert werden, indem diese das Durchströmen von Kraftstoff, Il bzw. Bremsflüssigkeit ermöglichen.

Eine weitere Ausgestaltung der Ventileinrichtung sieht vor, dass sie ein Mengensteuerventil einer Kraftstoff-Hochdruckpumpe ist. Mengensteuerventile werden zum präzisen Zumessen der der Hochdruckpumpe zugeführten Kraftstoffmenge verwendet. Die erfindungsgemäß verbesserten Führungseigenschaften des Führungselements wirken sich dabei vorteilhaft aus.

Nachfolgend werden beispielhafte Ausführungsformen der Erfindung unter Bezugnahme auf die Zeichnung erläutert. In der Zeichnung zeigen:
- Figur 1: ein vereinfachtes Schema einer Ventileinrichtung in einer teilweisen Schnittansicht;
- Figur 2: ein Mengensteuerventil in einer teilweisen Schnittdarstellung;
- Figur 3: eine Draufsicht auf ein Führungselement; und
- Figur 4: eine Schnittansicht IV-IV des Führungselements von Figur 3.

Es werden für funktionsäquivalente Elemente und Größen in allen Figuren auch bei unterschiedlichen Ausführungsformen die gleichen Bezugszeichen verwendet.

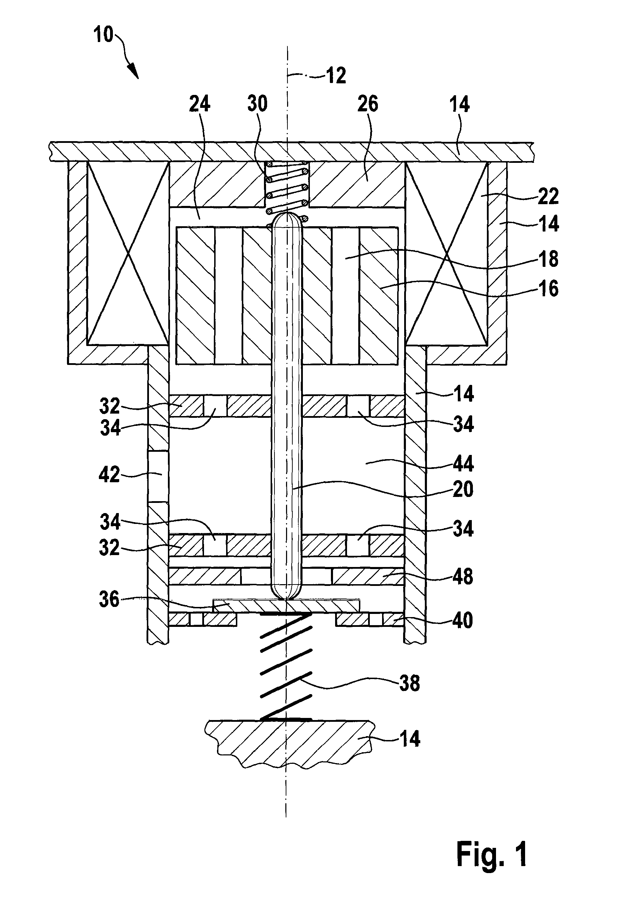

Figur 1 zeigt eine Teilansicht einer Ventileinrichtung 10 in einer stark schematischen und vereinfachten Schnittdarstellung. Die Ventileinrichtung 10 ist ein Element eines Mengensteuerventils einer nicht dargestellten Brennkraftmaschine und ist im Wesentlichen rotationssymmetrisch um eine Längsachse 12 ausgeführt. Die Ventileinrichtung 10 umfasst mehrere verschiedenartige Abschnitte eines Gehäuses 14, in welchen Elemente der Ventileinrichtung 10 angeordnet sind. In einem oberen Bereich der Zeichnung ist ein axial bewegbarer Anker 16 angeordnet, welcher axiale Ankerbohrungen 18 aufweist. Der Anker 16 ist an einem - in der Zeichnung oberen - Endbereich eines Ventilelements 20 starr befestigt. Das Ventilelement 20 ist beweglich und stellt somit ein Bewegungselement 20 dar. Eine in der Zeichnung obere Stirnfläche des Ankers 16 ist in der gezeigten axialen Position des Ankers 16 über einen Ankerspalt 24 von einem Polkern 26 beabstandet. Radial um den Anker 16 und den Polkern 26 ist die Wicklung einer Spule 22 der Ventileinrichtung 10 angeordnet. Oberhalb des Ankers 16 ist zwischen dem Anker 16 bzw. einem Endabschnitt des Ventilelements 20 und einem Abschnitt des Gehäuses 14 eine Ankerfeder 30 angeordnet, welche den Anker 16 - und damit das Ventilelement 20 - in der Zeichnung nach unten beaufschlagt. Das Ventilelement 20 ist mittels zweier Führungselemente 32 radial geführt. Die Führungselemente 32 weisen Ausnehmungen 34 auf, durch welche Kraftstoff in axialer Richtung fließen kann.

Ein in der Zeichnung unterer Endbereich des Ventilelements 20 ist an einem plattenförmigen Ventilkörper 36 angeschlagen. Das Ventilelement 20 beaufschlagt den Ventilkörper 36 in der Zeichnung nach unten gegen die Kraft einer Ventilfeder 38, so dass der Ventilkörper 36 an einem Ruhesitz 40 anliegt. Die Ventilfeder 38 ist an einem Abschnitt des Gehäuses 14 abgestützt.

Ferner umfasst das Gehäuse 14 eine radiale Öffnung 42, durch welche Kraftstoff in einen Fluidraum 44 der Ventileinrichtung 10 fließen kann. In der Zeichnung oberhalb des Ventilkörpers 36 ist ein Dichtsitz 48 angeordnet, an welchem der Ventilkörper 36 anschlagen kann.

In Figur 1 ist der geöffnete Zustand der Ventileinrichtung 10 dargestellt. Dabei ist die Spule 22 nicht bestromt und der Ventilkörper 36 wird mittels der Ankerfeder 30 und des Ventilelements 20 in der gezeigten Offenstellung beaufschlagt.

Wenn die Spule 22 bestromt ist, wird der Anker 16 durch magnetische Kraft in der Zeichnung nach oben von dem Polkern 26 angezogen, so dass der Ankerspalt 24 im Wesentlichen verschwindet. Die Ventilfeder 38 beaufschlagt den Ventilkörper 36 in der Zeichnung nach oben gegen den Dichtsitz 48, so dass die Ventileinrichtung 10 schließen kann.

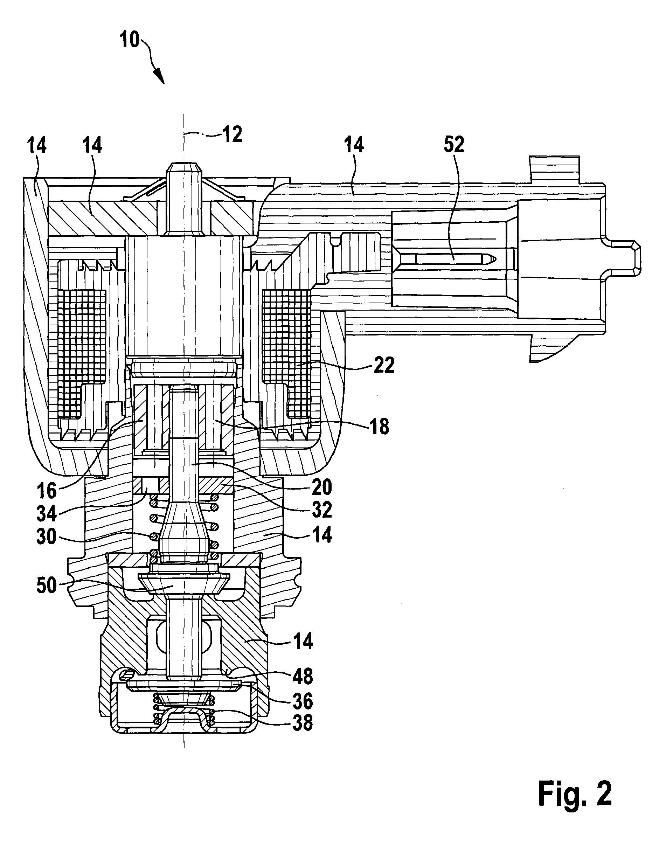

Figur 2 zeigt eine teilweise Schnittdarstellung eines Mengensteuerventils 10 einer Kraftstoff-Hochdruckpumpe einer Brennkraftmaschine. Der grundsätzliche Aufbau und die grundsätzliche Funktion sind der Ventileinrichtung 10 von Figur 1 zumindest ähnlich. Die jeweiligen Elemente können daher durch ihre Bezugszeichen identifiziert werden.

In der Ventileinrichtung 10 von Figur 2 ist die Ankerfeder 30 zwischen dem Führungselement 32 und einem Nadelbund 50 angeordnet, wobei die Ankerfeder 30 ebenfalls das Ventilelement 20 in der Zeichnung nach unten beaufschlagt. Das Führungselement 32 ist in dem Gehäuse 14 eingepresst. Die Ausnehmung 34 ist beispielhaft dargestellt. In einem rechten oberen Bereich der Figur 2 ist eine Kontaktierung 52 zum Anschluss der Spule 22 angeordnet.

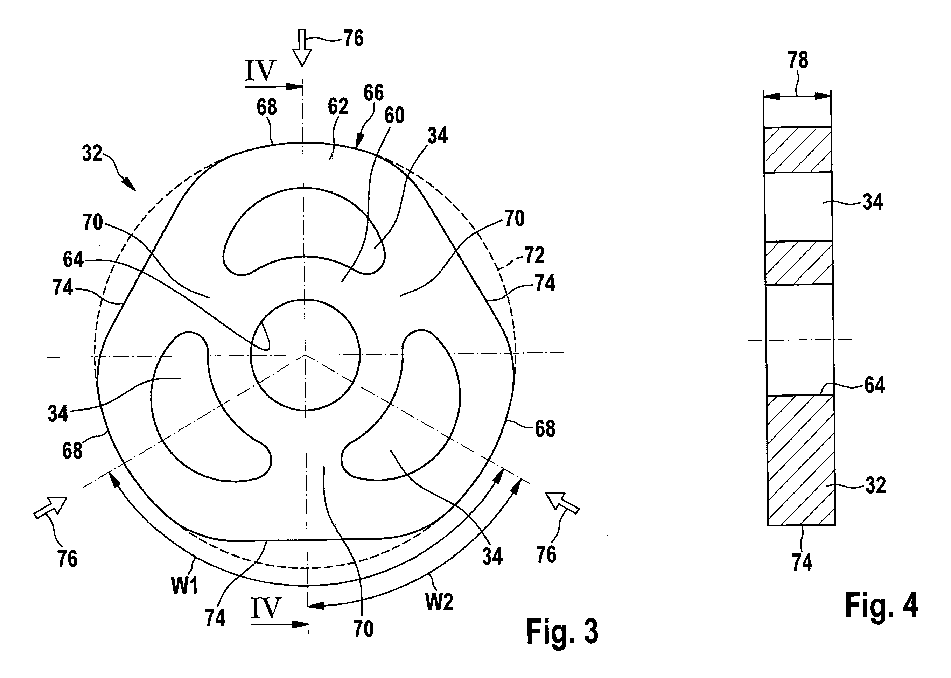

Figur 3 zeigt das Führungselement 32 in einer Draufsicht. Das Führungselement 32 ist radialsymmetrisch entsprechend einer Anzahl N (auf diese wird weiter unten noch eingegangen) aufgebaut und umfasst einen radial inneren ringartigen Abschnitt 60 ("innerer Abschnitt 60") und einen radial äußeren ringartigen Abschnitt 62 ("äußerer Abschnitt 62"). Die Anzahl N beträgt drei. In dem inneren Abschnitt 60 ist eine Führungsausnehmung 64 als zentrische Bohrung ausgeführt. Der äußere Abschnitt 62 weist an seinem Außenumfang 66 N=drei über den Umfang gleichmäßig verteilt angeordnete Kontaktabschnitte 68 auf, welche jeweils zueinander einen Winkel W1 von 120° bilden. Der innere Abschnitt 60 ist mit dem äußeren Abschnitt 62 über ebenfalls N=drei in Umfangsrichtung gleichmäßig verteilt angeordnete Verbindungsabschnitte 70 verbunden. Die Verbindungsabschnitte 70 sind in Umfangsrichtung gesehen in Bezug auf die Kontaktabschnitte 68 um einen Winkel W2 versetzt. Der Winkel W2 ergibt sich aus der Formel

W2 = 180°/N = 60°, mit vorliegend N=3.

Zwischen den Verbindungsabschnitten 70 sind die Ausnehmungen 34 angeordnet, welche vorliegend nierenförmig sind. Der äußere Abschnitt 62 ist innerhalb eines Umkreises 72 angeordnet, wobei der äußere Abschnitt 62 zwischen den Kontaktabschnitten 68 drei Abflachungen 74 in Bezug auf den Umkreis 72 aufweist. Vorliegend sind die Abflachungen 74 "flach" ausgeführt. In einer nicht gezeigten ersten alternativen Ausführung weisen die Abflachungen 74 eine konvexe und in einer zweiten alternativen Ausführung eine konkave Außenkontur auf.

Das vorliegend einstückig durch einen Stanzvorgang hergestellte Führungselement 32 wird in einen radial inneren zylindrischen Abschnitt des Gehäuses 14 mittels der drei Kontaktabschnitte 68 eingepresst. Dabei ist ein Innenradius des Gehäuseabschnitts geringfügig kleiner als der Radius des Umkreises 72, um die gewünschte Presskraft beziehungsweise Festigkeit zu ermöglichen. Die im eingepressten Zustand auf das Führungselement 32 einwirkenden radialen Kräfte sind durch drei Pfeile 76 symbolisch dargestellt.

Man erkennt, dass die Presskräfte in Richtung der Pfeile 76 auf die Kontaktabschnitte 68 beziehungsweise den äußeren Abschnitt 62 wirken, jedoch von dort nicht radial nach innen weitergeführt werden können, da die Ausnehmungen 34 dieses verhindern. Die Presskräfte werden durch Verformungen der Ausnehmungen 34 aufgenommen. Dadurch ist die Führungsausnehmung 64 von den auf die Kontaktabschnitte 68 wirkenden Presskräften stark entkoppelt. Daher bleibt die Geometrie beziehungsweise der Radius der Führungsausnehmung 64 im Wesentlichen unverändert. Entsprechend erfordert das zur Führung des Bewegungselements 20 nötige radiale Spiel keine oder nur geringe zusätzliche Toleranzen zur Berücksichtigung möglicher Verformungen der Führungsausnehmung 64 infolge der Pressung.

Figur 4 zeigt eine Schnittansicht des Führungselements 32 der Figur 3 entlang einer Linie IV-IV. Das Führungselement 32 weist eine Dicke beziehungsweise Materialstärke 78 auf.

Es versteht sich, dass es nicht zwingend erforderlich ist, dass die Kontaktabschnitte 68, die Ausnehmungen 34 und/oder die Verbindungsabschnitte 70 jeweils gleichmäßig über den Umfang verteilt sind. Ebenso ist es erfindungsgemäß möglich, dass die Anzahl der Kontaktabschnitte 68 auch größer als die Anzahl der Verbindungsabschnitte 70 sein kann.

## Patentansprüche

1. Ventileinrichtung (10) mit einem Bewegungselement (20) und einem Führungselement (32), welches eine Führungsausnehmung (64) zur Führung des Bewegungselements (20) aufweist und in ein Ventilgehäuse (14) eingepresst ist wobei das Führungselement (32) einen radial inneren ringartigen Abschnitt (60) und einen radial äußeren ringartigen Abschnitt (62) umfasst, wobei in dem radial inneren ringartigen Abschnitt (60) die Führungsausnehmung (64) angeordnet ist, wobei der radial äußere ringartige Abschnitt (62) an seinem Außenumfang (66) Kontaktabschnitte (68) aufweist, mittels derer er in das Ventilgehäuse (14) eingepresst ist, und wobei der radial innere ringartige Abschnitt (60) mit dem radial äußeren ringartigen Abschnitt (62) über Verbindungsabschnitte (70) verbunden ist, welche in Umfangsrichtung gesehen in Bezug auf die Kontaktabschnitte (68) versetzt angeordnet sind, **dadurch gekennzeichnet, dass** die Ventileinrichtung (10) eine Anzahl N von über den Umfang wenigstens in etwa gleichmäßig verteilt angeordneten Kontaktabschnitten (68) aufweist, und dass Verbindungsabschnitte (70) um einen Winkel (W2) von ungefähr 180°/N zu den Kontaktabschnitten (68) versetzt angeordnet sind.

2. Ventileinrichtung (10) mit einem Bewegungselement (20) und einem Führungselement (32), welches eine Führungsausnehmung (64) zur Führung des Bewegungselements (20) aufweist und in ein Ventilgehäuse (14) eingepresst ist wobei das Führungselement (32) einen radial inneren ringartigen Abschnitt (60) und einen radial äußeren ringartigen Abschnitt (62) umfasst, wobei in dem radial inneren ringartigen Abschnitt (60) die Führungsausnehmung (64) angeordnet ist, wobei der radial äußere ringartige Abschnitt (62) an seinem Außenumfang (66) Kontaktabschnitte (68) aufweist, mittels derer er in das Ventilgehäuse (14) eingepresst ist, und wobei der radial innere ringartige Abschnitt (60) mit dem radial äußeren ringartigen Abschnitt (62) über Verbindungsabschnitte (70) verbunden ist, welche in Umfangsrichtung gesehen in Bezug auf die Kontaktabschnitte (68) versetzt angeordnet sind, **dadurch gekennzeichnet, dass** auf dem Außenumfang (66) des äußeren ringartigen Abschnitts (62) in Umfangsrichtung gesehen zwischen den Kontaktabschnitten (68) Abflachungen (74) vorhanden sind.

3. Ventileinrichtung nach Anspruch 1 oder 2, **dadurch gekennzeichnet, dass** die Menge der Verbindungsabschnitte (70) höchstens gleich groß ist wie die Anzahl N der Kontaktabschnitte (68).

4. Ventileinrichtung (10) nach einem der Ansprüche 1 bis 3, **dadurch gekennzeichnet, dass** die Anzahl (N) drei beträgt.

5. Ventileinrichtung (10) nach einem der vorhergehenden Ansprüche, **dadurch gekennzeichnet, dass** in Umfangsrichtung gesehen zwischen den Verbindungsabschnitten (70) Ausnehmungen (34) vorhanden sind.

6. Ventileinrichtung (10) nach Anspruch 5, **dadurch gekennzeichnet, dass** die Ausnehmungen (34) nierenförmig sind.

7. Ventileinrichtung (10) nach Anspruch 2, **dadurch gekennzeichnet, dass** die Abflachung (74) eine konvexe oder konkave Außenkontur aufweist.

8. Ventileinrichtung (10) nach wenigstens einem der vorhergehenden Ansprüche, **dadurch gekennzeichnet, dass** das Führungselement (32) einstückig hergestellt ist.

9. Ventileinrichtung (10) nach wenigstens einem der vorhergehenden Ansprüche, **dadurch gekennzeichnet, dass** das Führungselement (32) mittels Stanzen, einem spanabtragenden Verfahren oder MIM hergestellt ist.

10. Ventileinrichtung (10) nach einem der vorhergehenden Ansprüche, **dadurch gekennzeichnet, dass** sie zum Schalten von Kraftstoff, hydraulischem Öl oder Bremsflüssigkeit verwendet wird.

11. Ventileinrichtung (10) nach Anspruch 10, **dadurch gekennzeichnet, dass** sie ein Mengensteuerventil einer Kraftstoff-Hochdruckpumpe ist.

## Claims

1. Valve device (10) having a movement element (20) and a guide element (32) which has a guide recess (64) for guiding the movement element (20) and which is pressed into a valve housing (14), wherein the guide element (32) comprises a radially inner annular portion (60) and a radially outer annular portion (62), wherein the guide recess (64) is arranged in the radially inner annular portion (60), wherein the radially outer annular portion (62) has at the outer periphery (66) thereof contact portions (68), by means of which it is pressed into the valve housing (14), and wherein the radially inner annular portion (60) is connected to the radially outer annular portion (62) by means of connection portions (70) which are arranged so as to be offset in relation to the contact portions (68) when viewed in the peripheral direction, **characterized in that** the valve device (10) has a number N of contact portions (68) which are arranged so as to be distributed over the periphery at least substantially uniformly and **in that** connection portions (70) are arranged so as to be offset by an angle (W2) of approximately 180°/N relative to the contact portions (68).

2. Valve device (10) having a movement element (20) and a guide element (32) which has a guide recess (64) for guiding the movement element (20) and which is pressed into a valve housing (14), wherein the guide element (32) comprises a radially inner annular portion (60) and a radially outer annular portion (62), wherein the guide recess (64) is arranged in the radially inner annular portion (60), wherein the radially outer annular portion (62) has at the outer periphery (66) thereof contact portions (68), by means of which it is pressed into the valve housing (14), and wherein the radially inner annular portion (60) is connected to the radially outer annular portion (62) by means of connection portions (70) which are arranged so as to be offset in relation to the contact portions (68) when viewed in the peripheral direction, **characterized in that** flattened portions (74) are provided between the contact portions (68) on the outer periphery (66) of the outer annular portion (62) when viewed in the peripheral direction.

3. Valve device according to Claim 1 or 2, **characterized in that** the quantity of connection portions (70) is at a maximum of the same size as the number N of contact portions (68).

4. Valve device (10) according to one of Claims 1 to 3, **characterized in that** the number (N) is three.

5. Valve device (10) according to one of the preceding claims, **characterized in that** recesses (34) are provided between the connection portions (70) when viewed in the peripheral direction.

6. Valve device (10) according to Claim 5, **characterized in that** the recesses (34) are kidney- like.

7. Valve device (10) according to Claim 2, **characterized in that** the flattened portion (74) has a convex or concave outer contour.

8. Valve device (10) according to at least one of the preceding claims, **characterized in that** the guide element (32) is produced in one piece.

9. Valve device (10) according to at least one of the preceding claims, **characterized in that** the guide element (32) is produced by means of stamping, a chip- removal method or MIM (metal injection molding).

10. Valve device (10) according to one of the preceding claims, **characterized in that** it is used to switch fuel, hydraulic oil or brake fluid.

11. Valve device (10) according to Claim 10, **characterized in that** it is a quantity control valve of a high-pressure fuel pump.

## Revendications

1. Dispositif de soupape (10) comprenant un élément de déplacement (20) et un élément de guidage (32), lequel comprend un évidement de guidage (64) pour le guidage de l'élément de déplacement (20) et est enfoncé dans un boîtier de soupape (14), l'élément de guidage (32) comportant une portion annulaire (60) radialement intérieure et une portion annulaire (62) radialement extérieure, l'évidement de guidage (64) étant disposé dans la portion annulaire (60) radialement intérieure, la portion annulaire (62) radialement extérieure comprenant sur sa périphérie extérieure (66) des portions de contact (68) au moyen desquelles elle est enfoncée dans le boîtier de soupape (14), et la portion annulaire (60) radialement intérieure étant reliée à la portion annulaire (62) radialement extérieure par le biais de portions de liaison (70), lesquelles, vues dans la direction périphérique, sont disposées de manière décalée par rapport aux portions de contact (68), **caractérisé en ce que** le dispositif de soupape (10) comprend un nombre N de portions de contact (68) disposées de manière au moins approximativement uniformément répartie sur la périphérie, et **en ce que** les portions de liaison (70) sont disposées de manière décalée d'un angle (W2) d'environ 180°/N par rapport aux portions de contact (68).

2. Dispositif de soupape (10) comprenant un élément de déplacement (20) et un élément de guidage (32), lequel comprend un évidement de guidage (64) pour le guidage de l'élément de déplacement (20) et est enfoncé dans un boîtier de soupape (14), l'élément de guidage (32) comportant une portion annulaire (60) radialement intérieure et une portion annulaire (62) radialement extérieure, l'évidement de guidage (64) étant disposé dans la portion annulaire (60) radialement intérieure, la portion annulaire (62) radialement extérieure comprenant sur sa périphérie extérieure (66) des portions de contact (68) au moyen desquelles elle est enfoncée dans le boîtier de soupape (14), et la portion annulaire (60) radialement intérieure étant reliée à la portion annulaire (62) radialement extérieure par le biais de portions de liaison (70), lesquelles, vues dans la direction périphérique, sont disposées de manière décalée par rapport aux portions de contact (68), **caractérisé en ce que** des aplatissements (74) sont, vus dans la direction périphérique, présents entre les portions de contact (68) sur la périphérie extérieure (66) de la portion annulaire (62) extérieure.

3. Dispositif de soupape selon la revendication 1 ou 2, **caractérisé en ce que** la quantité des portions de liaison (70) est au plus aussi grande que le nombre N des portions de contact (68).

4. Dispositif de soupape (10) selon l'une quelconque des revendications 1 à 3, **caractérisé en ce que** le nombre (N) vaut trois.

5. Dispositif de soupape (10) selon l'une quelconque des revendications précédentes, **caractérisé en ce que** des évidements (34) sont, vus dans la direction périphérique, présents entre les portions de liaison (70).

6. Dispositif de soupape (10) selon la revendication 5, **caractérisé en ce que** les évidements (34) sont réniformes.

7. Dispositif de soupape (10) selon la revendication 2, **caractérisé en ce que** l'aplatissement (74) présente un contour extérieur convexe ou concave.

8. Dispositif de soupape (10) selon au moins l'une quelconque des revendications précédentes, **caractérisé en ce que** l'élément de guidage (32) est fabriqué d'une seule pièce.

9. Dispositif de soupape (10) selon au moins l'une quelconque des revendications précédentes, **caractérisé en ce que** l'élément de guidage (32) est fabriqué par découpage, au moyen d'un procédé par enlèvement de copeaux ou par moulage par injection de métal (MIM).

10. Dispositif de soupape (10) selon l'une quelconque des revendications précédentes, **caractérisé en ce qu'**il est utilisé pour la commutation de carburant, d'huile hydraulique ou de liquide de frein.

11. Dispositif de soupape (10) selon la revendication 10, **caractérisé en ce qu'**il est une soupape de commande de débit d'une pompe à carburant haute pression.
